(19) Europäisches Patentamt
European Patent Office
Office européen des brevets

(11) **EP 1 269 818 A1**

(12) **DEMANDE DE BREVET EUROPEEN**

(43) Date de publication:
**02.01.2003 Bulletin 2003/01**

(51) Int Cl.⁷: $A01C\ 17/00$

(21) Numéro de dépôt: **02291515.1**

(22) Date de dépôt: **18.06.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **18.06.2001 FR 0107991**

(71) Demandeurs:
- **Etablissement National d'Enseignement Supérieur Agronomique de Dijon, ENESAD 21079 Dijon Cedex (FR)**
- **CENTRE NATIONAL DU MACHINISME AGRICOLE, DU GENIE RURAL, DES EAUX ET DES FORETS (CEMAGREF) 92160 Antony (FR)**

(72) Inventeurs:
- **Rousselet, Marc Montoldre, 03150 Varennes sur Allier (FR)**

- Zwaenepoel, Philippe
  **Montoldre, 03150 Varennes sur Allier (FR)**
- Cointault, Frédéric
  **21079 Dijon cedex (FR)**
- Sarrazin, Philippe
  **21079 Dijon cedex (FR)**
- Chopinet, Bernard
  **21079 Dijon cedex (FR)**
- Piron, Emmanuel
  **Montoldre, 03150 Varennes sur Allier (FR)**
- Paindavoine, Michel,
  **Laboratoire Informatique et 21000 Dijon (FR)**

(74) Mandataire: **Laget, Jean-Loup
Cabinet Brema,
78, avenue Raymond Poincaré
75116 Paris (FR)**

(54) **Dispositif de mesure de la distribution angulaire de débit, des vitesses et/ou des trajectoires des particules pour un distributeur centrifuge de particules solides à épandre**

(57) L'invention concerne un dispositif de mesure de la distribution angulaire de particules solides à épandre telles que de l'engrais autour de chaque disque (1) d'un distributeur centrifuge de particules solides à épandre et/ou des vitesses des particules solides et/ou des trajectoires de particules solides à la périphérie du disque (1), ledit distributeur étant du type comportant une trémie à partir de laquelle les particules solides à épandre tombent par gravité sur des disques (1) en rotation munis de pales qui assurent la distribution et la projection desdites particules solides.

L'invention consiste en qu'il comporte des moyens de mesure comprenant au moins un moyen de prise d'image tel qu'une caméra à capteurs bidimensionnels, qui est placé en position verticale ou oblique et cadre le voisinage d'un ou des disques d'épandage (1) et/ou du ou des organes d'épandage et/ou du ou des organes d'alimentation en particules sur un disque de manière à obtenir au moins une image d'un disque et des particules en cours de projection et/ou projetées ainsi que des moyens de traitement et d'analyse de ladite ou desdites images de manière à mesurer et/ou à calculer les trajectoires et/ou les vitesses des particules et/ou la distribution angulaire du débit de particules.

Application aux distributeurs centrifuge de particules solides.

Figure 1.

EP 1 269 818 A1

## Description

L'invention concerne un distributeur centrifuge de particules solides à épandre telles que de l'engrais ou épandeur centrifuge.

Un distributeur d'engrais a pour rôle de répandre sur une parcelle de terrain une quantité donnée de fertilisant, le plus souvent des engrais solides. Un distributeur d'engrais est habituellement constitué d'un organe de stockage tel qu'une trémie, d'un système d'alimentation et de dosage comportant une trappe, d'agitateurs, et d'un ou plusieurs systèmes d'éparpillage de l'engrais constitués de disques. La trémie est équipée d'orifices à ouverture variable (trappe par exemple) qui permettent de régler les débits séparément de chaque côté. L'engrais extrait de ces ouvertures tombe par gravité des organes d'alimentation sur les disques en rotation, chacun des disques étant muni de pales qui assurent la distribution et la projection du flux d'engrais, lequel forme une nappe d'épandage au sol.

Le principe de la distribution réalisée selon une seule nappe d'épandage conduit à obtenir une répartition transversale hétérogène. Cette répartition se caractérise par une quantité d'engrais qui diminue du centre du passage vers les extrémités transversales de la nappe. Pour obtenir un épandage homogène, la technique d'application consiste à effectuer sur l'ensemble d'une parcelle un recroisement de nappes d'épandage grâce à des passages successifs réalisés en aller et retour. La distance entre deux passages est appelée « distance de passage ». Cette distance de passage est généralement fixe et issue d'un jalonnage au semis. Les réglages des distributeurs d'engrais permettent d'optimiser le recouvrement des nappes d'épandage, en fonction de l'engrais utilisé, pour obtenir une « largeur optimale de travail » (distance entre passages théoriques qui entraînerait le meilleur recouvrement) identique à la distance de passage et ainsi une répartition régulière de l'engrais sur le sol.

L'intérêt d'utiliser ce type de distributeur réside dans sa simplicité de fonctionnement, son faible encombrement, sa grande largeur de travail et son faible coût.

La largeur optimale de travail est le résultat d'une succession de répartitions instantanées d'engrais au sol lors de l'avancement du distributeur. Cette répartition instantanée est influencée par les caractéristiques physiques de l'engrais utilisé, les conditions atmosphériques, l'usure des pales, les réglages du distributeur, etc. Il est difficile de prédire la répartition instantanée de l'engrais au sol car elle est la combinaison des mécanismes d'accélération centrifuge et du vol balistique de granulés. Par ailleurs, il est difficile de mesurer ladite répartition car toute mesure mécanique perturberait le vol balistique. Il est alors difficile de prédire, en l'absence de capteurs, les bons réglages à utiliser pour obtenir la répartition au sol instantanée optimale.

On connaît un dispositif de mesure de la largeur de travail qui comporte deux capteurs, placés au moment de la mesure dans le flux de granulés à un endroit prédéterminé angulairement et correspondant à une direction d'épandage des granulés optimale, dans le but de centrer le flux de granulés par action sur les organes de réglage du distributeur. Le principe de fonctionnement repose sur la mesure de la différence des signaux issus des deux capteurs (sonores ou piézoélectriques) excités par impacts de granulés d'engrais, cette différence devant être nulle pour la direction d'épandage de référence retenue. Cependant, dans ce dispositif, les capteurs perturbent la nappe d'épandage et de ce fait, ils ne peuvent pas être utilisés pour une mesure en continu de la largeur de travail. De plus, la mesure de la largeur de travail n'est basée que sur deux points de mesure et non sur la totalité de la nappe d'épandage. En outre, les capteurs doivent être bien appariés pour obtenir des résultats fiables et, malgré cette précaution, les réponses des capteurs peuvent dériver et fausser le résultat des mesures.

Le brevet DE-A-19636636 décrit un dispositif dans lequel on utilise une caméra pour enregistrer l'inclinaison des pales d'un disque d'épandage de manière à contrôler en continu l'apport d'engrais sans qu'il soit question de déterminer la distribution angulaire des particules autour du disque.

On connaît par DE-A-19500824 un procédé pour déterminer les données de réglage d'un épandeur centrifuge d'engrais et un dispositif approprié qui est monté sur un épandeur centrifuge et qui comporte des capteurs qui détectent le flux d'engrais selon la direction de déplacement et la vitesse des particules ainsi que la quantité d'engrais dans des secteurs et qui comporte un calculateur pour recevoir les données déterminées par les capteurs pour déterminer la répartition transversale de l'engrais en fonction de la largeur de travail et de la précision de répartition. Les granulés d'engrais sont détectés à l'aide d'un système vidéo ou autre en tant que capteurs. La caméra permet d'obtenir une image à trois dimensions de l'épandage d'engrais, pour en déterminer la répartition transversale et/ou la précision de distribution à l'aide d'un calculateur. L'imagerie en trois dimensions apparaît cependant difficile à mettre en oeuvre et permet d'obtenir une répartition transversale ce qui n'est pas efficace pour déterminer la distribution autour du disque.

Les inventeurs ont remarqué une relation directe entre la distribution des particules solides telles que des granulés d'engrais autour de chaque disque et la répartition au sol. Ainsi, en déterminant la distribution d'engrais autour d'un disque, on peut estimer la répartition au sol et, à partir de celle-ci, la largeur de travail réellement obtenue pour un réglage donné. Cette distribution autour des disques est rendue possible par la détermination des trajectoires des particules.

Ainsi, un premier but de l'invention est de pouvoir disposer d'un dispositif permettant la mesure en temps réel de la distribution angulaire du débit de particules solides telles que de l'engrais autour de chaque disque et/ou des trajectoires des particules solides telles que des granulés d'engrais et/ou des vitesses des particules solides telles que des granulés d'engrais à la périphérie de chaque disque.

Un autre but de l'invention est de proposer également un dispositif de mesure de la répartition au sol des particules solides telles que de l'engrais d'un distributeur centrifuge de particules solides à épandre ainsi qu'un dispositif de mesure de la largeur de travail d'un distributeur centrifuge de particules solides à épandre tel qu'un distributeur d'engrais centrifuge.

A cet effet, l'invention a pour objet un dispositif de mesure de la distribution angulaire de particules solides à épandre telles que de l'engrais autour de chaque organe d'épandage tel qu'un disque d'un distributeur centrifuge de particules solides à épandre telles que de l'engrais et/ou des vitesses des particules solides et/ou des trajectoires de particules solides à la périphérie du disque, ledit distributeur centrifuge étant du type comportant un organe d'alimentation en particules sur le disque tel qu'une trémie à partir de laquelle les particules solides à épandre tombent par gravité sur des disques en rotation munis de pales qui assurent la distribution et la projection desdites particules solides, caractérisé en ce qu'il comporte des moyens de mesure comprenant au moins un moyen de prise d'image, tel qu'une caméra à capteurs bidimensionnels, qui est placé en position verticale ou oblique et cadre le voisinage d'un ou des disques d'épandage et/ou du ou des organes d'épandage et/ou du ou des organes d'alimentation en particules sur un disque de manière à obtenir au moins une image d'un disque et des particules en cours de projection et/ou projetées ainsi que des moyens de traitement et d'analyse de ladite ou desdites images de manière à mesurer et/ou à calculer les trajectoires et/ou les vitesses des particules et/ou la distribution angulaire du débit de particules.

Les particules solides sont de préférence des granulés d'engrais minéral ou organique mais peuvent également être du sable, du sel ou toute autre matière solide devant être épandue.

Ainsi, par exemple, on réalise des images du flux de granulés éjecté du disque d'épandage et le traitement desdites images permet d'analyser les trajectoires, les vitesses des granulés ainsi que la distribution angulaire du débit d'engrais.

De préférence, le dispositif de mesure selon l'invention comporte un dispositif d'éclairage qui peut être constant, instantané par flash ou stroboscopique.

On peut prévoir également un écran de fond assurant un arrière-plan sombre à la scène.

Les images prises par les caméras sont référencées spatialement par rapport à la scène et peuvent comporter tout ou partie du disque d'épandage et la prise des images est, si besoin, synchronisée à une position angulaire des pales du disque.

De même, le déclenchement des flashes ou le stroboscope peuvent être synchronisés avec une position angulaire des pales du disque.

Ainsi selon une forme de réalisation, on prend une image indexée sur le passage de la pale d'un disque à l'aide de capteurs associés, avec une ou plusieurs expositions, le décalage des expositions étant programmable et/ou ajustable et l'éclairage pouvant être constant, par flash et/ou stroboscopique, les images ainsi prises représentant la même scène de telle façon qu'on peut extraire desdites images la (les) position(s) physique(s) des particules dans la pale.

Selon une autre forme de réalisation, on prend plusieurs images successives de la même scène, le décalage entre chaque image étant programmable et/ou ajustable de telle sorte qu'on peut extraire desdites images les positions physiques des particules dans la pale à différents instants.

Dans ces deux formes de réalisation, les images peuvent être stéréoscopiques. Lesdits enregistrements d'images ou les images sont alors traitées et analysées pour en extraire les paramètres de flux de particules dans la pale du disque (vitesse de déplacement du flux et/ou des particules dans la pale, distribution du flux de particules sur la pale et quantité volumétrique des particules situées dans la pale).

De préférence, les techniques d'imagerie utilisées sont des techniques d'imagerie rapide appropriées pour les vitesses rapides des particules. On peut donc ainsi obtenir des prises de vue dont le traitement ultérieur par les moyens de traitement et d'analyse permet une détermination des trajectoires de particules.

L'invention concerne également un dispositif de mesure en temps réel de la répartition instantanée au sol de particules solides à épandre telles que de l'engrais pour un distributeur centrifuge de particules solides à épandre tel qu'un distributeur centrifuge d'engrais qui comporte le dispositif de mesure de la distribution angulaire de débit de particules solides et/ou des vitesses des particules solides et/ou des trajectoires des particules solides, à la périphérie du disque, selon l'invention ainsi que des moyens d'analyse de la mesure de la distribution angulaire de débit de particules solides et/ou des vitesses des particules solides et/ou des trajectoires des particules solides pour déterminer ladite répartition instantanée des particules solides au sol.

Ainsi, le dispositif selon l'invention permet donc de déterminer la distribution angulaire, les vitesses et les trajectoires des particules de manière à obtenir la répartition de l'engrais au sol, en particulier en combinant ces données avec moyens d'analyse comprenant des modèles de vols balistiques et/ou de fonctions de transfert.

L'invention a également pour objet un dispositif de mesure de la largeur optimale de travail en temps réel sur un distributeur centrifuge de particules solides à épandre telles que de l'engrais comportant un dispositif de mesure en temps réel de la répartition au sol des particules solides ainsi que des moyens d'analyse de la mesure de la répartition au sol des particules solides pour déterminer la largeur optimale de travail.

On décrira maintenant des exemples de réalisation de l'invention plus en détail en référence au dessin en annexe dans lequel :

la figure 1 représente schématiquement les trajectoires de granulés d'engrais dans un premier mode de mise en oeuvre du dispositif de mesure de l'invention ;

la figure 2 représente schématiquement la distribution des granulés à un instant d'observation selon une variante du premier mode de mise en oeuvre du dispositif selon l'invention ;

la figure 3 représente schématiquement le principe du déclenchement séquentiel de flashes selon un troisième mode de mise en oeuvre du dispositif selon l'invention ;

la figure 4 représente des exemples d'image selon le troisième mode de mise en oeuvre du dispositif selon l'invention.

Dans les exemples donnés, les particules solides sont de l'engrais.

Selon un premier mode de mise en oeuvre du dispositif selon l'invention, on utilise une imagerie lente, à savoir que le temps d'exposition est tel qu'un ou plusieurs jets d'engrais traversent le champ de la caméra lors de la prise d'une image et les moyens de mesure comportent en outre :

des moyens d'analyse des trajectoires des granulés d'engrais sur une image prise pour déterminer la distribution angulaire du débit de granulés autour d'un disque 1,
des moyens de calcul de l'angle moyen d'éjection $\Omega$moy ou de la distribution de l'angle d'éjection en fonction de la position de la pale ($\Omega$=f($\theta$)), et
des moyens de calcul de la vitesse moyenne ou de la distribution angulaire des vitesses des granulés autour du disque.

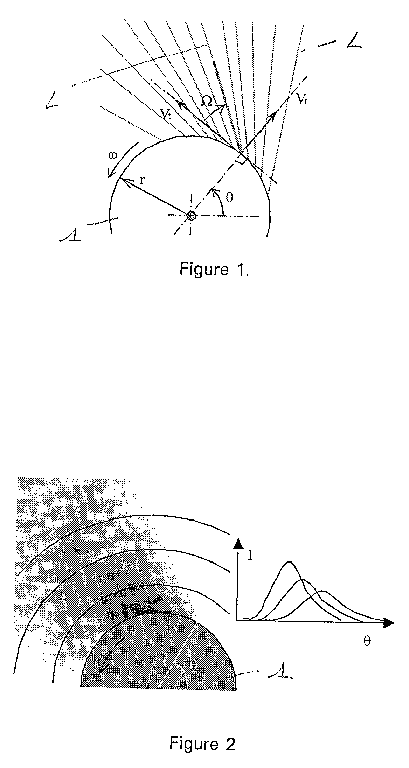

Les images obtenues dans ce mode d'imagerie lente sont constituées de la superposition de lignes L correspondant chacune à la trajectoire de vol d'un granulé en sortie d'un disque 1 (voir la figure 1 qui représente la schématisation d'une image à exposition longue avec faible cumul de trajectoires ; la trajectoire d'un granulé, les composantes radiales et tangentielles de la vitesse d'éjection). Si la densité de trajectoire est suffisamment faible pour qu'une proportion d'entre elles puissent être individualisées, une analyse de la direction de ces trajectoires permet de déterminer l'angle $\Omega$ d'éjection des granulés correspondant à l'angle entre la trajectoire et la tangente au disque 1 au point d'éjection (cf figure 1).

Cet angle $\Omega$ caractérise la vitesse radiale d'éjection Vr en fonction de la vitesse tangentielle Vt, elle-même fonction uniquement de la vitesse angulaire du disque 1 selon l'équation : Vt = r.$\omega$ ; Vr = a.Vt avec a = tan($\Omega$), r étant le rayon de pale et $\omega$ étant la vitesse de rotation du disque 1.

On calcule ainsi l'angle moyen d'éjection $\Omega$moy ou la distribution de l'angle d'éjection $\Omega$ en fonction de la position de la pale déterminée par l'angle $\theta$ ($\Omega$ = f($\theta$)).

L'angle d'éjection $\Omega$ et la vitesse de rotation $\omega$ permettent le calcul de la norme de la vitesse d'éjection qui permet de quantifier la portée du granulé.

L'intensité lumineuse de chaque trajectoire peut être intégrée pour construire une distribution I=f($\theta$) représentative de la distribution angulaire du débit d'engrais.

Lorsque la densité de trajectoires sur une image est telle que les trajectoires ne sont pas individualisées (figure 2), l'analyse de l'image s'effectue alors en mesurant la distribution d'intensité le long de plusieurs fenêtres d'analyse (lignes, cercles concentriques, etc.) pour retrouver une direction moyenne d'éjection du flux et estimer la distribution angulaire du débit d'engrais.

On peut également ajuster un modèle bidimensionnel sur l'intégralité de l'image en utilisant pour paramètre d'ajustement l'angle d'éjection $\Omega$moy et une distribution angulaire de débit d'engrais.

L'imagerie lente permet donc de calculer une direction moyenne d'éjection et/ou une distribution de direction, une vitesse moyenne d'éjection et/ou une distribution de vitesse et une distribution angulaire du débit d'engrais.

Selon un deuxième mode de mise en oeuvre du dispositif, on prend une image d'un jet d'engrais sur un temps suffisamment court pour que l'engrais ne parcourt qu'une faible distance par rapport au champ couvert par l'image. On réalise ceci en contrôlant le temps d'exposition de la caméra ou en contrôlant le temps d'éclairage de la scène à l'aide d'un flash. Les moyens de mesure comprennent en outre des moyens de calcul des paramètres d'éjection des granulés d'engrais à un instant t d'observation grâce à un modèle théorique de distribution spatiale C des granulés d'engrais dans l'image dans lequel a est un facteur d'ajustement.

En effet, dans le cas d'expositions ou de flashes modérément rapides de l'ordre de quelques millisecondes, un granulé parcourt une distance significative et laisse une trace rectiligne sur l'image. Dans le cas où on utilise un flash très rapide de l'ordre de quelques dizaines de nanosecondes, l'image fige les granulés d'engrais dans leur position à l'instant t d'observation.

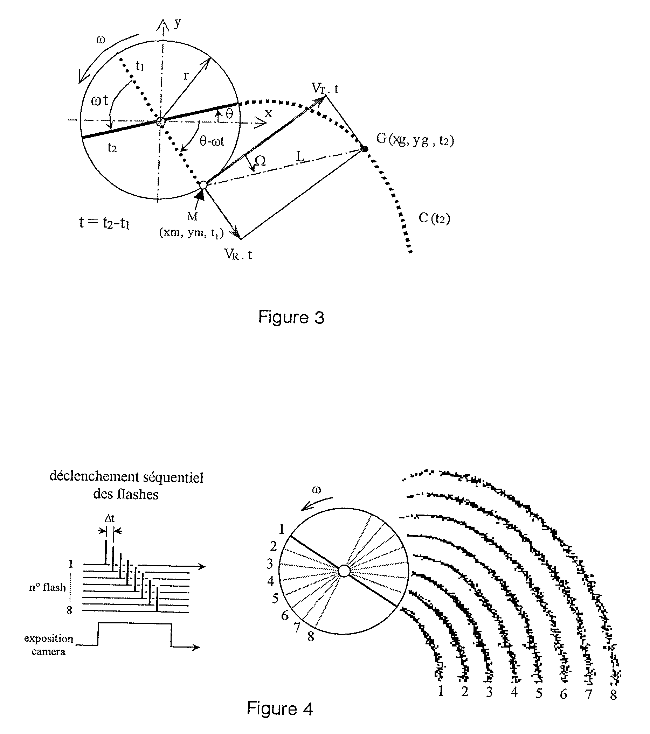

L'ensemble des granulés à l'instant t d'observation suit donc une distribution spatiale C qui peut être ajustée par un modèle théorique (voir la figure 3 qui représente la schématisation de la distribution des granulés à l'instant d'observation (courbe C), le point d'éjection étant le point M, et les équations associées).

Ce modèle théorique peut être établi selon les équations suivantes :

$$xg = r(1 + a\omega t)\cos(\vartheta-\omega t)-\omega t \sin(\vartheta-\omega t)]$$

$$yg = r(1 + a\omega t)\sin(\vartheta-\omega t)-\omega t \cos(\vartheta-\omega t)]$$

dans lesquelles a est le facteur d'ajustement et correspond au rapport entre la vitesse radiale Vr et la vitesse tangentielle Vt au moment de l'éjection.

L'affinement de a permet le calcul de la norme moyenne de la vitesse d'éjection et de la direction moyenne d'éjection pour chaque position de pale θ.

Lors de l'utilisation de flashes très rapides, une analyse de la distribution de a lors de l'ajustement itératif du modèle permet l'estimation de la distribution de vitesses d'éjection des granulés. Cette distribution permet de caractériser la distribution de portée des granulés. La mesure de la distribution d'intensité lumineuse en fonction de l'abscisse curviligne de C permet de caractériser la distribution angulaire du débit d'engrais.

On peut ainsi mesurer la vitesse moyenne d'éjection et la distribution de vitesses dans le cas d'images très rapides, l'angle moyen d'éjection et la distribution angulaire du débit d'engrais.

Selon un troisième mode de mise en oeuvre du dispositif selon l'invention, on enregistre une image superposant plusieurs positions successives d'un même jet d'engrais. Les moyens de mesure du dispositif selon l'invention comportent alors une caméra à capteurs bidimensionnels à cadence moyenne combinée à un stroboscope ou à un ensemble de n flashes rapides déclenchés successivement avec un écart temporel contrôlé de telle sorte que l'image montre n distributions spatiales C correspondant chacune à une position du jet d'engrais à l'instant d'observation correspondant au déclenchement du stroboscope ou d'un flash, des moyens de calcul de la distribution des granulés d'engrais à au moins un des instants t d'observation grâce à un modèle théorique de la/des distributions spatiales C des granulés d'engrais dans lequel a est un facteur d'ajustement, des moyens d'analyse à l'aide d'algorithmes d'estimation de mouvement de manière à calculer le champ de déplacement entre les positions successives ce qui permet de mesurer les vecteurs de déplacement individuels de tout ou partie des granulés et/ou ensembles de granulés, des moyens de calcul pour caractériser les paramètres d'éjection des granulés à partir de la mesure du déplacement de tout ou partie des granulés et/ou ensembles de granulés.

La figure 4 représente le principe du déclenchement séquentiel des flashes, exemple d'image multiexposition et une schématisation des positions angulaires du disque 1 correspondant aux différents instants d'observation.

On mesure ainsi les vitesses d'éjection individuelles de tout ou partie des granulés et/ou ensembles de granulés, les directions d'éjection individuelles de tout ou partie des granulés et/ou ensembles de granulés et la distribution angulaire du débit d'engrais.

La caractérisation complète peut être réduite à des paramètres caractéristiques de la distribution de vitesses (norme et/ou direction) et de la distribution angulaire du débit d'engrais.

## Revendications

1. Dispositif de mesure de la distribution angulaire de particules solides à épandre telles que de l'engrais autour de chaque disque (1) d'un distributeur centrifuge de particules solides à épandre et/ou des vitesses des particules solides et/ou des trajectoires de particules solides à la périphérie du disque (1), ledit distributeur étant du type comportant un organe d'alimentation en particules sur le disque tel qu'une trémie à partir de laquelle les particules solides à épandre tombent par gravité sur des disques (1) en rotation munis de pales qui assurent la distribution et la projection desdites particules solides, **caractérisé en ce qu'**il comporte des moyens de mesure comprenant au moins un moyen de prise d'image tel qu'une caméra à capteurs bidimensionnels, qui est placé en position verticale ou oblique et cadre le voisinage d'un ou des disques d'épandage (1) et/ou du ou des organes d'épandage et/ou du ou des organes d'alimentation en particules sur un disque de manière à obtenir au moins une image d'un disque et des particules en cours de projection et/ou projetées ainsi que des moyens de traitement et d'analyse de ladite ou desdites images de manière à mesurer et/ou à calculer les trajectoires et/ou les vitesses des particules et/ou la distribution angulaire du débit de particules.

2. Dispositif selon la revendication 1, **caractérisé en ce qu'**il comporte un dispositif d'éclairage constant, instantané par flash ou stroboscopique.

3. Dispositif selon la revendication 2, **caractérisé en ce que** la prise d'image est synchronisée avec une position angulaire du disque (1).

4. Dispositif selon l'une des revendications 2 et 3, **caractérisé en ce que** le déclenchement de flash ou le stroboscope sont synchronisés avec la position angulaire du disque (1).

5. Dispositif selon l'une des revendications 2 à 4, **caractérisé en ce qu'**il comporte un écran de fond assurant un arrière-plan sombre à la scène.

**6.** Dispositif selon l'une des revendications 1 à 5, **caractérisé en ce que**, lorsque le temps d'exposition est tel qu'un ou plusieurs jets de particules solides traversent le champ de la caméra lors de la prise d'une image, les moyens de mesure comportent en outre :

des moyens d'analyse des trajectoires de particules solides sur une image prise pour déterminer la distribution angulaire du flux de particules solides autour du disque (1),
des moyens de calcul de l'angle moyen d'éjection Ωmoy ou de la distribution de l'angle d'éjection en fonction de la position de la pale (Ω=f(θ)),
des moyens de calcul de la vitesse moyenne ou de la distribution angulaire des vitesses des particules solides autour du disque (1).

**7.** Dispositif selon l'une des revendications 1 à 5, **caractérisé en ce que**, lorsque la prise d'image se fait sur un temps suffisamment court pour que les particules solides à épandre ne parcourt qu'une faible distance par rapport au champ couvert par l'image, les moyens de mesure comprennent en outre :

des moyens de calcul des paramètres d'éjection des particules solides à un instant t d'observation grâce à un modèle théorique de distribution spatiale C des particules solides dans l'image dans lequel a est un facteur d'ajustement.

**8.** Dispositif selon l'une des revendications 1 à 5, **caractérisé en ce que**, lorsqu'on enregistre une image superposant plusieurs positions successives d'un même jet de particules solides à épandre, les moyens de mesure comportent :

une caméra à capteurs bidimensionnels à cadence moyenne combinée à un stroboscope ou à un ensemble de n flashes rapides déclenchés successivement avec un écart temporel contrôlé de telle sorte que l'image montre n distributions spatiales C correspondant chacune à une position du jet de particules solides à l'instant d'observation correspondant au déclenchement du stroboscope ou d'un flash, des moyens de calcul de la distribution des particules solides à au moins un des instants t d'observation grâce à un modèle théorique de la/des distributions spatiales C des particules solides dans lequel a est un facteur d'ajustement, des moyens d'analyse à l'aide d'algorithmes d'estimation de mouvement de manière à calculer le champ de déplacement entre les positions successives ce qui permet de mesurer les vecteurs de déplacement individuels de chaque particule solide et/ou d'ensembles de particules solides, des moyens de calcul pour caractériser les paramètres d'éjection des particules solides à partir de la mesure du déplacement de chaque particule solide et/ou des ensembles de particules solides.

**9.** Dispositif de mesure en temps réel de la répartition instantanée au sol de particules solides à épandre telles que de l'engrais pour un distributeur centrifuge de particules solides à épandre tel qu'un distributeur centrifuge d'engrais du type comportant une trémie à partir de laquelle les particules solides tombent par gravité sur des disques (1) en rotation munis de pales qui assurent la distribution et la projection des particules solides, **caractérisé en ce qu'**il comporte un dispositif de mesure de la distribution angulaire de débit des particules solides à épandre et/ou des vitesses des particules solides et/ou des trajectoires de particules solides, à la périphérie du disque (1) selon l'une des revendications 1 à 8 ainsi que des moyens d'analyse de la mesure de la distribution angulaire de débit de particules solides à épandre et/ou des vitesses des particules solides et/ou des trajectoires des particules solides pour déterminer ladite répartition instantanée des particules solide à épandre au sol.

**10.** Dispositif de mesure de la largeur optimale de travail en temps réel sur un distributeur centrifuge de particules solides à épandre telles que de l'engrais du type comportant une trémie à partir de laquelle les particules solides tombent par gravité sur des disques (1) en rotation munis de pales qui assurent la distribution et la projection de particules solides, **caractérisé en ce qu'**il comporte un dispositif de mesure en temps réel de la répartition des particules solides au sol selon la revendication 9 ainsi que des moyens d'analyse de la mesure de ladite répartition au sol des particules solides pour déterminer la largeur optimale de travail.

Figure 1.

Figure 2

Figure 3

Figure 4

Office européen
des brevets

**RAPPORT DE RECHERCHE EUROPEENNE**

Numéro de la demande

EP 02 29 1515

| | **DOCUMENTS CONSIDERES COMME PERTINENTS** | | |
|---|---|---|---|
| Catégorie | Citation du document avec indication, en cas de besoin, des parties pertinentes | Revendication concernée | **CLASSEMENT DE LA DEMANDE** (Int.Cl.7) |
| X<br>A | DE 196 36 636 A (HILKER ANDREAS)<br>12 mars 1998 (1998-03-12)<br>* colonne 1, ligne 61 – colonne 2, ligne 18 *<br>* colonne 6, ligne 53 – colonne 7, ligne 22 * | 1,3,6,9,<br>10<br>8 | A01C17/00 |
| A | DE 195 00 824 A (AMAZONEN WERKE DREYER H)<br>21 septembre 1995 (1995-09-21)<br>* colonne 2, alinéa 3 *<br>* colonne 5, alinéa 2; revendications 8,9; figure 3 * | 1,3,5-7,<br>9,10 | |
| A | EP 0 298 549 A (LELY NV C VAN DER)<br>11 janvier 1989 (1989-01-11)<br>* colonne 7, ligne 45 – colonne 8, ligne 12 * | 2,4 | |
| | | | **DOMAINES TECHNIQUES RECHERCHES** (Int.Cl.7)<br><br>A01C |

Le présent rapport a été établi pour toutes les revendications

| Lieu de la recherche | Date d'achèvement de la recherche | Examinateur |
|---|---|---|
| LA HAYE | 30 août 2002 | Hinrichs, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 1515

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

30-08-2002

| Document brevet cité au rapport de recherche | | | Date de publication | Membre(s) de la famille de brevet(s) | | Date de publication |
|---|---|---|---|---|---|---|
| DE | 19636636 | A | 12-03-1998 | DE | 19636636 A1 | 12-03-1998 |
| | | | | DE | 19704374 A1 | 13-08-1998 |
| DE | 19500824 | A | 21-09-1995 | DE | 19500824 A1 | 21-09-1995 |
| | | | | AT | 189099 T | 15-02-2000 |
| | | | | CZ | 9602689 A3 | 12-02-1997 |
| | | | | DE | 59507697 D1 | 02-03-2000 |
| | | | | WO | 9524823 A1 | 21-09-1995 |
| | | | | EP | 0751703 A1 | 08-01-1997 |
| | | | | FI | 963460 A | 31-10-1996 |
| EP | 0298549 | A | 11-01-1989 | NL | 8701551 A | 01-02-1989 |
| | | | | DE | 3886285 D1 | 27-01-1994 |
| | | | | DE | 3886285 T2 | 07-07-1994 |
| | | | | EP | 0298549 A2 | 11-01-1989 |

EPO FORM P0460

Pour tout renseignement concernant cette annexe : voir Journal Officiel de l'Office européen des brevets, No.12/82